# EUROPÄISCHE PATENTANMELDUNG

(11) **EP 3 916 504 A1**
(43) Veröffentlichungstag der Anmeldung: **01.12.2021**
(21) Anmeldenummer: 20177186.2
(22) Anmeldetag: 28.05.2020
(51) Int. Cl.: G05B 23/02, G06N 20/10

(54) **DIGITALE SCHADENVERMEIDUNG 4.0**

(71) Anmelder: Heffner, Thilo, 88662 Überlingen (DE)
(72) Erfinder: Heffner, Thilo, 88662 Überlingen (DE)
(74) Vertreter: Meyer zu Bexten, Elmar

(57) **Zusammenfassung**

**Aufgabe**

Der vorliegenden Erfindung liegt die Aufgabe zugrunde, die Eintrittswahrscheinlichkeiten von Schäden durch digitales Schadensmanagement mit einer bereits im Vorfeld stattfindenden einheitlichen Überwachung vielschichtiger potenzieller Schadensquellen zu reduzieren.

**Lösung**

Um die Vielschichtigkeit potenzieller Schadensquellen zu vereinheitlichen, sind jeweils geeignete Messstellen/Sensoren vorgesehen. Die gesamte Verarbeitung der Messdaten, Aufbereitung, Monitoring im Vorfeld und das Auslösen von Warnungen oder Alarmen, bereits bevor es zu einem Schaden kommt, erfolgt einheitlich zentral durch eine Cloud-Plattform.

Das gesamte System ist so aufgebaut, dass es keine Rolle spielt, welche Messwerte erfasst werden. Zur Erfassung einer bestimmten Schadensart müssen lediglich die geeigneten Sensoren installiert werden.

Sich schnell entwickelnde Schadensgefahren (z.B. plötzlich auftretender Temperaturanstiege an nicht einzeln überwachten Stellen) und/oder weitläufiger Verteilung können durch entsprechende Sensoren mit großflächiger Erfassung überwacht werden.

Mit Methoden der selbstlernender künstlichen Intelligenz/Machine Learning werden zusätzlich Abweichungen erkannt, die ansonsten nicht unmittelbar zu Alarmierungen führen würden (z,B. Anomalien in den Verläfufen, schleichende Änderungen, etc.).

Zusätzlich werden mit diesen Methoden der selbstlernender künstlichen Intelligenz/Machine Learning Prognosen mit Eintrittswahrscheinlichkeiten von Schäden erstellt.

## Beschreibung

### Technisches Gebiet

Die vorliegende Technologie betrifft Schadensvermeidung durch digitales aktives Management von Schadensrisiken.

### Stand der Technik

Zur Bekämpfung von Schäden bestehen eine Reihe von jeweils für eine bestimmte Schadensart ausgelegter Systeme. Im Prinzip verfügen solche Systeme über Sensoren zur Detektion von Schadenseintritten. Schadensquellen werden überwacht. Bei Schadenseintritt werden Alarme ausgelöst. Manche Systeme lösen auch entsprechende Maßnahmen zur Schadensbekämpfung aus (z.B. löst eine Sprinkleranlage im Brandfall die Freigabe von Wasser aus, jedoch ohne zusätzlich zu alarmieren).

Obwohl das Prinzip der Überwachung und Alarmierung ähnlich ist, sind Systeme immer nur für eine bestimmte Schadensart ausgelegt. Bestehen an einem Ort unterschiedliche Schadensrisiken, ist der Betrieb mehrerer Einzel-Systeme erforderlich, die jedoch meistens nach demselben Prinzip arbeiten.

Diese Systeme haben meist reaktiven Charakter: sie reagieren erst, wenn ein Schaden entstanden ist. Z.B. unterbrechen FI-Schutzschalter Stromleitungen wenn Fehlströme entstanden sind, Gaswarner melden den Ausbruch von Gas, Rauchmelder die Rauchentwicklung und Sprinkleranlagen dämmen ausgebrochene Brände ein. Dies macht für Schadensarten mit ad hoc eintretenden Schäden Sinn, die nicht durch vorherige Erkennung vermieden werden könnten.
Würde bei Schadensarten mit einem sich ankündigenden Verlauf bereits der sich anbahnende Verlauf aktiv überwacht, könnten Schäden vermieden werden, bevor sie überhaupt entstehen.

### Kurzbeschreibung der Erfindung

Die beanspruchte Erfindung wird im Folgenden so offenbart, dass die technische Aufgabe, die ihr zugrunde liegt, richtig beurteilt und deren Lösung verstanden werden kann.

### Technische Aufgabe

Der vorliegenden Erfindung liegt die Aufgabe zugrunde, die Eintrittswahrscheinlichkeiten von Schäden durch ein aktives einheitliches Management vielschichtiger potenzieller Schadensquellen und/oder Schadensarten bereits vor Schadenseintritt zu reduzieren.

### Technische Lösung

Um die Vielschichtigkeit potenzieller Schadensquellen zu vereinheitlichen, sind geeignete Messstellen/Sensoren vorgesehen. Die gesamte Verarbeitung der Messdaten, Aufbereitung, Monitoring und das Auslösen von Alarmen erfolgt einheitlich zentral durch eine Cloud-Plattform. Bei Ausfall der Internetverbindung erfolgt die Auslösung von Alarmen direkt lokal.

Das gesamte System ist so aufgebaut, dass es keine Rolle spielt, welche Messwerte erfasst werden. Sowohl sich schnell entwickelnde Schadensgefahren (z.B. plötzlich auftretender Temperaturanstiege) als auch nicht einzeln überwachten Stellen können durch Sensoren mit entsprechend großflächiger Erfassung überwacht werden.

### Vorteilhafte Wirkungen

Die nachfolgend beschriebene Verfahrenserfindung ist geeignet, durch freie Konfigurierbarkeit
1. mit einem System unterschiedliche Schadensarten zu überwachen
2. bereits bei Schadensanbahnung (noch vor Schadenseintritt) mehrstufig Meldungen, wie z.B. Warnungen, Alarme zu erzeugen
   a. Meldung 1
   b. Meldung 2
   c. ...
      Vorwarnung 1
   d. Vorwarnung 2
   e. ...
      Alarm 1
   f. Alarm 2
   g. ...
      Hierzu können mehrstufig Schwellwerte/Warngrenzen hinterlegt werden. Komplexere Alarmierungs-Strategien können in Form von Logiken (digitalen Skripts) und digitalen Workflows abgedeckt werden
3. Auch Anomalien im Verlauf (z.B. schleichende Entwicklungen, ungewöhnliche Ausschläge, etc.) und/oder in der Kombination von Messwerten führen zur Auslösung der Alarmierung, ohne dass Schwellwerte über-oder unterschritten sein müssen.
4. die Möglichkeit, Abläufe und Regeln (wie z.B. Eskalations-Regeln) in Form von frei definierbaren Workflows zu hinterlegen
5. unterschiedliche Arten von Warnungen/Alarmierungen (auch gleichzeitig mehrere) auszulösen
6. Frei wählbare Art der Benachrichtigungen, wie z.B. E-Mail, SMS, autom. Telefonanruf (Anbindung von SIP-Services, etc.), etc.
7. Jederzeit eine Übersicht in Echtzeit über den aktuellen Stand aller Überwachungen (Sensoren) und im Webbrowser an zu zeigen.
8. Den Verlauf der Messwerte in frei wählbarem Zeitraum an zu zeigen
9. Prognosen über zukünftige Verläufe mit Wahrscheinlichkeiten zu erstellen
10. Aufgaben z.B. für Prüfung und Anlagenüberwachung ad hoc oder wiederkehrend zu erzeugen, Benachrichtigungen über anstehende Aufgaben aus zu lösen, die Bearbeitung zu protokollieren und bei Nichterfüllung Meldungen/Alarme auszulösen (vgl. Nr. 2, Erzeugung Warnungen, Alarme).
11. Zur Erzeugung von Aufgaben Systemzustände zu ermitteln (z.B. Nutzungsdauer) und vor Fälligkeit der Erledigung (z.B. bei Wartungsaufgaben) einstellbar rechtzeitig eine Aufgabe (z.B. Wartungsaufgaben) zu erzeugen, deren Einhaltung, Ausführung und Erledigung zu protokollieren.

### Kurze Beschreibung der Zeichnungsfiguren

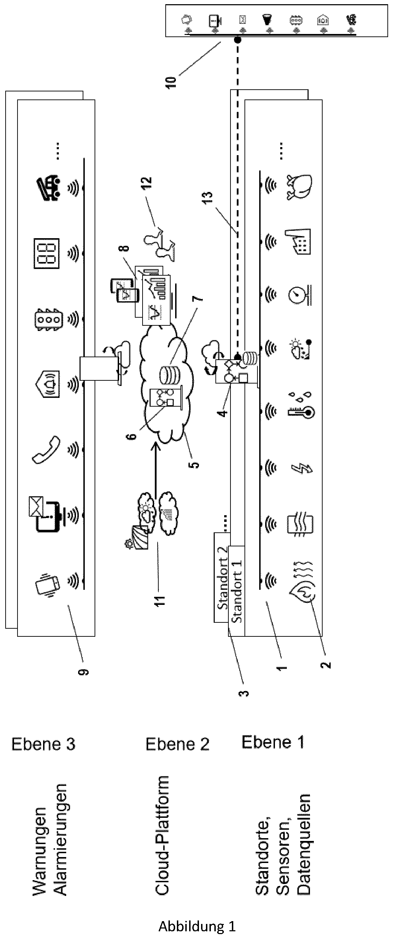

Abbildung 1 illustriert eine Ausführungsart der Erfindung.

### Beschreibung der Ausführungsarten

Die in Abbildung 1 gezeigte digitale Cloud-basierte Plattform gliedert sich in die nachfolgend beschriebenen Ebenen.

### Logische Ebene 1: Datenerfassung

Die logische Ebene 1 besteht aus digitalen Mess-Sensoren (1), Daten-Schnittstellen (1), (4), einer Datenerfassungs-, Steuerungs- und Datenübertragungs- und Pufferungseinheit mit Internet-Anbindung (4).

Zur Erfassung der Messwerte werden marktübliche digitale Sensoren (2) an den potenziellen Schadensquellen vor Ort installiert, und senden (1) ihre Messdaten an die digitale Ausleseeinheit (4). Alle Messdaten werden von der Ausleseeinheit (4) zwischengespeichert und sofort in Echtzeit über eine verschlüsselte Internetverbindung an die gesicherte Cloud-Datenbank (7) (logische Ebene 2) übertragen.

### Logische Ebene 2: Cloud-Datenbank (7) und Cloud-Serversystem (6)

In der logischen Ebene 2 werden alle Daten erfasst (Entgegennahme aus den Datenquellen der Ebene 1), langfristig gespeichert und sofort beim Eintreffen aus der logischen Ebene 1 für die Echtzeitanzeige (Logische Ebene 3) bereitgestellt.

Die logische Ebene 2 besteht aus einer vor Ort betreibbaren oder in externen Rechenzentren gehosteten Cloud Plattform (5) zur Speicherung (7) und Verarbeitung (6) der Daten (2), Auslösung von Alarmen (siehe oben unter Nr. 2, Erzeugung Warnungen, Alarme), einer Cloud-basierten Datenbank (7) und einem Serversystem (6) sowie aus Webbrowserbasierten, frei konfigurierbaren digitalen Anzeigedashboards(8).

Zusätzlich besteht diese Cloud-Plattform aus Funktionen zur Vorhersage von Eintrittswahrscheinlichkeiten und Zeitpunkten von Ereignissen, wie z.B. Schäden.

### Logische Ebene 3: frei konfigurierbare Echtzeitanzeige im Webbrowser

Die logische Ebene 3 dient Benachrichtigungs- und Alarmierungs-Funktionen (9). Zusätzlich stehen dem Anwender nach Rollen und Zugriffsberechtigung unterteilte Webbrowser basierte, frei konfigurierbare Anzeige-Dashboards (8) zur Verfügung. In diesen Dashboards kann sich der Anwender (12) beliebige Kennzahlen als Anzeige Widgets auf dem Dashboard per drag&drop selbst zusammenstellen. Z.B. kann so der Verlauf der Ist- Temperatur einem Liniendiagramm über der Zeitachse in Beziehung mit dem Schwellwert gesetzt werden und sowohl aktuelle Ist-Zahl Fortschrittsbalken oder auch als zeitlicher Verlauf in einem Balken- oder Liniendiagramm dargestellt werden.

Dabei ist der Betrachtungszeitraum frei einstellbar, so dass auch die Werte aus der Vergangenheit jederzeit sichtbar sind.

Dazu werden
1. die unterschiedlichen Schadensquellen (2) mit jeweils geeigneten digitalen Sensoren (1) ausgestattet, die kontinuierlich Messdaten aufzeichnen und diese in Echtzeit (4) an das zentrale Überwachungssystem (5) weitergeben. Unterschiedlich sind jeweils nur die Sensoren (2). Diese sind für jede Schadensart und Gegebenheit der potenziellen Schadensquellen jeweils passend auswählbar und jederzeit änderbar oder ergänzbar (Zur Überwachung großflächiger Areale können z.B. batteriebetriebene Funk-Sensoren über Funknetze nach verschiedenen Standards (z.B. LORA- EnOcean, etc.) genutzt werden. Das System zur Überwachung (4), (5), und Alarmierung (9) kann diese beliebig adaptieren und ist ansonsten jeweils gleich.
   Es können unterschiedliche Standorte an geografisch unterschiedlichen Lagen einheitlich mit der zentralen Cloud-Plattform (5) überwacht werden.
2. Die vor Ort installierte Puffereinheit (4) dient sowohl der Datenübertragung zur zentralen Plattform (5) als auch zur Daten-Zwischenspeicherung und direkt Aktivierung (13) von Signalen vor Ort (z.B. rote Leuchte bei Schwellwertüberschreitungen), ohne dass dazu zwingend eine Internetverbindung zur zentralen Plattform (5) bestehen muss. Dazu wird die Daten-Puffereinheit (4) regelmäßig mit den Schwellwerten zur Alarmierung von der zentralen Plattform (5) und hinterlegt, so dass im Falle eines Internet- Netzausfalls alle vor Ort installierten Alarmierungssysteme (10) direkt (13) aktiviert werden können. Alle Ereignisse werden zwischengespeichert (4) und an die zentrale Plattform (5) nachgeliefert, sobald die Verbindung wieder besteht.
3. In der Zentralen Cloud Plattform erfolgt die Speicherung und Überprüfung der Messdaten, sowie die Auslösung von Alarmen. Von der Cloud-Plattform (5) werden weitere Third-party-Datenquellen (11) mit einbezogen (wie z.B. Wetter, Umgebungstemperatur, Luftfeuchte, Ferienkalender (erwartetes Personenaufkommen, etc.), sonstige Dienste, etc.), z.B. zur automatischen Nachführung der Alarmierungs-Schwellwerte- und Regeln (zur Vermeidung von Schadenseintritten durch Überwachung potenzieller Schadensquellen und mehrstufiger eskalierender Alarmierung noch vor Schadensausbruch während der Schadens-Anbahnungsphase, siehe oben).
4. Erstellung von Prognosen mit Wahrscheinlichkeit von Schadenseintritten. Hierzu werden Funktionen der Künstlichen Intelligenz und des Machine- Learning genutzt.
5. Mit Methoden der selbstlernender künstlichen Intelligenz/Machine Learning werden zusätzlich Abweichungen erkannt, die ansonsten nicht unmittelbar zu Alarmierungen führen würden (z.B. Anomalien in den Verläufen, schleichende Änderungen, etc.).
6. Erkennung von Schäden oder deren Anbahnung aus der Kombinationen mehrerer Werte, selbst wenn diese für sich alleine genommen weder Über- noch Unterschreitung von Schwellwerten und/oder Anomalien in den Verläufen aufweisen.
7. Eine Selbstüberwachung sorgt dafür, dass in Form geeigneter Selbsttest Fehler im System (z.B. zuende gehende Batteriekapazitäten bei Sensoren) rechtzeitig erkannt und gemeldet werden. Zusätzlich unterliegt der Betrieb der Rechner- und Servereinheiten einem gesicherten selbstüberwachten Betrieb, inkl. Backups- und Recovery Möglichkeiten.
8. Auslösung/Aktivierung von Aktoren in Ebene 1 (z.B. Öffnung von Lüftungsklappen, Unterbrechung von Stromkreisen, etc.).
9. Sammlung, Auswertung und Analyse der erfassten Schadensdaten Daten und deren Vermarktung

### Digitale Brandvermeidung

Wie oben beschrieben, mit folgender Ausprägung:
Es werden an den potenziellen Brandquellen (2) Temperatur- Sensoren (2) angebracht. Zur Überwachung großflächiger potenzieller Brandquellen (z.B. Wertstoffhöfe), werden kommen als Sensoren intelligente Wärmekameras zum Einsatz, die Hitzeentwicklungen großflächig erkennen und melden.

### Digitale Schadenvermeidung bei Geräten und Anlagen

Wie oben beschrieben, mit folgender Ausprägung:

Es werden Maschinensteuerungen digital verbunden (OPC-UA) und die Betriebsdaten übertragen.

### Weitere Ausführungsarten

Frei konfigurierbare Reportings , inkl. Wahl der Art und Rhythmus der Zustellung (E-Mail, etc.).

Benutzer Rollen, Möglichkeit Datenbasierter Geschäftsmodelle (z.B. Service- basiert) für Drittparteien (12) (z.B. Leistungs-Lieferanten, Kunden, Partner, etc.):

Die logische Ebene 3 ermöglicht auch Dritt-Parteien (12) kontrollierten Zugang zu den Daten ihrer Kunden/Geschäftspartner (5). Dadurch können z.B. Anbieter wie z.B. Versicherer den Verlauf der Schadensrisiken bei Ihren Kunden in Echtzeit mit verfolgen und anhand der Echtzeit-Einschätzung der Schadensrisiken neue Geschäftsmodelle (z.B. Servicebasiert) z.B. in Form von dynamisch vom Verlauf der Risikohöhen Prämienmodelle anbieten. Z.B. könnten höhere Außentemperaturen im Sommer zu tieferen Schwellwerten im erlaubten Temperaturbereich führen (z.B. frühere Auslösung von Warnungen/ Alarmen) und höheren Prämien als im Winter.

## Patentansprüche

1. Verfahren zur Schadensvermeidung,
**dadurch gekennzeichnet, dass**
mit jeweils geeigneten, vorzugsweise über ein Funknetz oder auch über Kabel verbundenen digitalen Sensoren (1) unterschiedliche Schadensquellen (2) an mindestens einem Standort (3) überwacht werden, die kontinuierlich Messdaten aufzeichnen und diese mittels einer Puffereinheit (4) vorzugsweise in Echtzeit an ein zentrales Überwachungssystem (5) mit einem Server (6) und einer Datenbank (7) weitergeben, welche vorzugsweise über ein Dashboard (8) abgefragt werden kann,
die Puffereinheit (4) die Messdaten zwischenspeichert und bei einer Über/Unterschreitungschreitung diesbezüglicher Schwellwerte einen Alarm (9,10) auslöst und das Überwachungssystem (5) informiert,
das Überwachungssystem (5) die Schwellwerte und oder Alarmierungsalgorithmen bedarfsweise anhand externer Datenquellen (11) anpasst und in der Puffereinheit (4) hinterlegt und
mittels künstlicher Intelligenz, insbesondere maschinellen Lernens, drohende Schäden prognostiziert werden.

2. Verfahren nach Anspruch 1,
**dadurch gekennzeichnet, dass**
die Sensoren (1) Temperaturfühler und die Schadensquellen (2) mögliche Brandherde sind.

3. Verfahren nach Anspruch 1 oder Anspruch 2,
**dadurch gekennzeichnet, dass**
Maschinensteuerungen gemäß OPC UA verbunden und Betriebsdaten übertragen werden.

4. Verfahren nach einem der vorherigen Ansprüche,
**dadurch gekennzeichnet, dass**
frei konfigurierbare Ereignisberichte erstellt werden.

5. Verfahren nach einem der vorherigen Ansprüche,
**dadurch gekennzeichnet, dass**
gemäß einem rollenbasierten Berechtigungskonzept Dritten Zugriff auf die Datenbank gewährt wird.
